# EUROPÄISCHE PATENTSCHRIFT

(11) **EP 1 836 021 B1**
(45) Veröffentlichungstag und Bekanntmachung des Hinweises auf die Patenterteilung: **02.09.2009**
(21) Anmeldenummer: 05812902.4
(22) Anmeldetag: 14.12.2005
(51) Int. Cl.: B23K 26/08, B23K 26/38, B23K 37/04, B26D 1/60, B26F 3/00

(54) **VERFAHREN ZUM SCHNEIDEN VON MATERIALTAFELN, INSBESONDERE METALLBLECHEN, SOWIE SCHNEIDANLAGE ZUR DURCHFÜHRUNG DIESES VERFAHRENS**
METHOD FOR CUTTING MATERIAL PLATES, ESPECIALLY METAL SHEETS, AND CUTTING SYSTEM FOR CARRYING OUT SAID METHOD
PROCEDE DE DECOUPE DE PANNEAUX, NOTAMMENT DE TOLES, ET DISPOSITIF DE DECOUPE DESTINE A LA MISE EN OEUVRE DE CE PROCEDE

(30) Priorität: 21.12.2004 CH 21212004
(43) Veröffentlichungstag der Anmeldung: 26.09.2007
(73) Patentinhaber: Merz, Karl, CH-5734 Reinach/AG (CH)
(72) Erfinder: Merz, Karl, CH-5734 Reinach/AG (CH)
(74) Vertreter: Wiedmer, Edwin
(86) Internationale Anmeldenummer: PCT/CH2005/000751
(87) Internationale Veröffentlichungsnummer: WO 2006/066430

(56) Entgegenhaltungen:
- EP-A- 0 454 620
- EP-A- 0 927 597
- PATENT ABSTRACTS OF JAPAN Bd. 1998, Nr. 10, 31. August 1998 (1998-08-31) -& JP 10 113787 A (AMADA CO LTD), 6. Mai 1998 (1998-05-06)
- PATENT ABSTRACTS OF JAPAN Bd. 016, Nr. 321 (M-1279), 14. Juli 1992 (1992-07-14) -& JP 04 091882 A (MITSUBISHI ELECTRIC CORP), 25. März 1992 (1992-03-25)

## Beschreibung

Die vorliegende Erfindung bezieht sich auf das Gebiet der schneidenden Materialbearbeitung. Sie betrifft ein Verfahren zum Schneiden von Materialtafeln gemäss dem Oberbegriff des Anspruch 1 sowie eine Schneidanlage zur Durchführung des Verfahrens gemäss dem Oberbegriff des Anspruchs 15. Ein solches Verfahren ist beispielsweise aus der Druckschrift JP 101 113 787 A bekannt.

### STAND DER TECHNIK

Im Zusammenhang mit in grosser Serie hergestellten Produkten, in denen Blechzuschnitte verarbeitet werden, wie z.B. bei Automobilen, werden Schneidanlagen eingesetzt, die im Taktbetrieb aus einzelnen Blechtafeln oder einem von einem Coil abgewickelten Blechband die gewünschten Blechzuschnitte (Nutzen) ausschneiden (siehe z.B. die EP-A1-0 527 114 und die EP-A1-1 402 986). Für den Schneidvorgang werden dabei zunehmend stationäre Laserschneideinrichtungen eingesetzt, bei denen ein Schneidkopf über das Blech verfahren wird, um die entsprechende Schnittkontur zu erzeugen. Nach Fertigstellung eines Blechzuschnitts muss je nach Art der Anlage entweder eine neue Blechtafel in die Laserschneideinrichtung eingeführt und positioniert werden, oder ein neuer Bandabschnitt vom Coil abgewickelt und in die Laserschneideinrichtung eingeführt und positioniert werden. Das Blech wird beim Schneiden horizontal liegend auf einem Arbeitstisch gehalten; der Schneidkopf wird mit senkrecht nach unten gerichtetem Laserstrahl über das Blech geführt. Zur Beschleunigung des Wechsels der Blechtafeln und damit zur Verringerung der Maschinenstillstandszeiten können Wechseltische eingesetzt werden (EP-A1-0 527 114). Hierbei werden abwechselnd zwei Tische benutzt, von denen der eine immer dann ausserhalb des Bearbeitungsbereiches ent- und beladen wird, wenn sich der andere Tisch mit einer Blechtafel gerade im Bearbeitungsbereich befindet und die aufliegende Blechtafel geschnitten wird.

Diese Art von Schneidanlagen haben jedoch verschiedene Nachteile:
- Da die Blechtafeln auf dem Bearbeitungstisch fast über die gesamte Tischfläche hin unterstützt werden müssen, trifft der durch die Blechtafel dringende Laserstrahl zwangsläufig auf unterhalb der Blechtafel im Schnittbereich liegende Teile des Tisches, auch wenn die Unterstützung durch eine Art Gitterrost erfolgt. Dies führt zu Beschädigungen des Tisches, die nach einer gewissen Laufzeit der Anlage ausgebessert werden müssen oder einen Austausch des Tisches erforderlich machen.
- Wenn beim Schneiden der Blechtafel, z.B. beim Schneiden von Löchern oder dgl., kleine separate Blechabschnitte entstehen, können diese nach unten auf den Tisch fallen oder verkippen und den weiteren Ablauf der Bearbeitung stören.
- Die horizontale Lage des Blechbandes bzw. der Blechtafeln erfordert bei grossen Blechbreiten im Bereich von mehreren Metern eine erhebliche Grundfläche der Anlage.
- Selbst beim Einsatz von Wechseltischen ergeben sich immer noch Stillstandszeiten im Bereich von mehreren Sekunden, die sich bei grossen Stückzahlen zu einer erheblichen gesamthaften Maschinenstillstandszeit summieren.

Um einige der aufgezählten Nachteile zu beseitigen, ist bereits ein Verfahren und eine Anlage zum Schneiden von Flachmaterial vorgeschlagen worden (EP-B1-0 454 620), bei dem das Flachmaterial in annähernd senkrechter Lage geschnitten wird. Eine solche Konfiguration hat verschiedene Vorteile:
- Da das Flachmaterial senkrecht oder nur leicht geneigt aufgehängt ist, bedarf es keiner Abstützung auf der Rückseite, um Verformungskräfte aufzufangen, sodass auf einen Tisch mit seiner Empfindlichkeit gegen den schneidenden Laserstrahl verzichtet werden kann.
- Die ausgeschnittenen Teile bzw. Abfälle können ungehindert nach unten fallen und durch ein unten angeordnetes Förderband oder dgl. fortlaufend entsorgt werden, ohne dass die Bearbeitung behindert wird.
- Da die Platten in senkrechter Stellung gelagert und transportiert werden können, sind Lagerung und Antransport besonders einfach und platzsparend.
- Nach dem Ausschneiden aller Teile kann das Restgitter der Platte auf einfache Weise aus dem Bearbeitungsbereich abtransportiert und zugleich eine neue Platte in den Bearbeitungsbereich gebracht werden; das Restgitter kann aber auch auf ein Förderband fallen gelassen und so abtransportiert werden.

Obgleich die in der EP-B1-0 454 620 vorgeschlagene Lösung gegenüber den mit horizontaler Lage und Tischen arbeitenden Lösungen einige Vorteile hat, bleiben nach wie vor Probleme hinsichtlich der Maschinenstillstandszeit, d.h., der Zeit, in der kein Schnitt ausgeführt wird. Ist nämlich eine Platte fertig geschnitten, muss sie zunächst aus der Schneidposition hängend entfernt werden, bevor eine neue, noch ungeschnittene Platte (ebenfalls hängend) in die Schneidposition gebracht werden kann. Auch hier verstreichen durch den Wechselprozess wertvolle Sekunden, in denen nicht geschnitten werden kann.

Aus JP 10/1113787 A ist eine Anlage zum Schneiden von vertikal angeordneten Materialtafeln bekannt. Mittels einer Schneidvorrichtung werden die Materialtafeln von einer Seite geschnitten, wobei die Materialtafeln zum Schneiden in zwei voneinander beabstandete Schneidpositionen gebracht werden.

Die EP 0 927 597 A1 und die JP 04 091882 A offenbaren Schneidanlagen mit jeweils zwei horizontal und parallel nebeneinander angeordneten Arbeitstischen zur Auflage von zwei zum Schneiden vorgesehenen Metalltafeln. Die Schneidvorrichtung wird zur Bearbeitung der Materialtafeln durch eine Schwenk- bzw. Verschiebebewegung zwischen zwei Positionen über jedem der Arbeitstische hin und her verschoben.

### DARSTELLUNG DER ERFINDUNG

Es ist daher Aufgabe der Erfindung, ein Verfahren und eine Vorrichtung zum Schneiden von Materialtafeln, insbesondere Metallblechen, anzugeben, welche die Nachteile bekannter Verfahren und Anlagen vermeiden und sich insbesondere durch drastisch reduzierte Maschinenstillstandszeiten auszeichnen.

Die Aufgabe wird durch die Gesamtheit der Merkmale des Ansprüchs 1 für den Verfahrenanspruch und und die Gesambeit der Merkmal des Ansprüchs 15 für den Vorrichtungsanspruch 15 gelöst. Der Kern der Erfindung besteht darin, dass bei weitgehend senkrechter Lage der Materialtafeln zum Schneiden der Materialtafeln zwei oder mehr unterschiedliche, von derselben Schneidvorrichtung erreichbare Schneidpositionen verwendet werden, und dass mittels der Schneidvorrichtung die in den unterschiedlichen Schneidpositionen befindlichen Materialtafeln nacheinander geschnitten werden. Durch die senkrechte Anordnung können die verschiedenen Schneidpositionen platzsparend vergleichsweise nahe beieinander angeordnet werden, so dass die gemeinsame Schneidvorrichtung nur wenig verstellt werden muss, um von einer Schneidposition zur nächsten zu gelangen. Die verschiedenen Schneidpositionen können unabhängig voneinander mit den Materialtafeln beschickt werden, so dass bei Beendigung eines Schneidvorgangs immer eine neue Materialtafel in einer andern Schneidposition bereit steht. Dadurch fallen als Ausfallzeiten nur die Zeiten für die Verstellung der Schneidvorrichtung an, die bei entsprechender Auslegung der Schneidvorrichtung sehr klein (Bruchteile von Sekunden) gehalten werden können. Zusätzlich zu der kleinen Maschinenausfallzeit sind auch alle Vorteile vorhanden, die sich aus der senkrechten Position der Materialtafeln ergeben und weiter oben bereits aufgelistet worden sind.

Bevorzugt wird, während eine erste Malerialtafel in einer ersten Schneidposition geschnitten wird, eine zweite Materialtafel in eine zweite Schneidposition gebracht, und nach dem Schneiden der ersten Materialtafel wird die Schneidvorrichtung auf die zweite Schneidposition eingestellt und die zweite Materialtafel geschnitten.

Insbesondere erfolgt in einem fortlaufend arbeitenden Verfahren der Wechsel zwischen den Schneidpositionen periodisch, und es wird, bevor eine neue Materialtafel zum Schneiden in eine Schneidposition gebracht wird, eine vorher in dieser Schneidposition geschnittene Materialtafel aus dieser Schneidposition entfernt.

Eine besonders einfache und platzsparende Einstellung der Schneidvorrichtung ergibt sich, wenn gemäss einer Ausgestaltung der Erfindung die Schneidpositionen um eine vertikale Achse herum rotationssymmetrisch angeordnet sind, und wenn die Schneidvorrichtung zum Erreichen der nächsten Schneidposition bezüglich der Achse entsprechend verstellt wird.

Bevorzugt wird zum Schneiden ein Laserstrahl verwendet, wobei zum Wechseln zwischen den Schneidpositionen der Laserstrahl entsprechend umgelenkt wird. Diese Umlenkung lässt sich sehr schnell vollziehen, so dass die Pausenzeit beim Übergang von einer Schneidposition zur nächsten sehr klein ist. Bei um 180° gegenüberliegenden Schneidpositionen lässt sich die Umlenkung z.B. sehr einfach mittels eines Schwenkspiegels oder dgl. erreichen.

Ein schneller Austausch der Materialtafeln in einer Schneidposition und ein vereinfachter Transportmechanismus lassen sich dadurch verwirklichen, dass die Materialtafeln in die Schneidpositionen hinein und aus den Schneidpositionen heraus hängend transportiert werden. Dies gilt besonders, wenn der Transport der Materialtafeln auf geraden Bahnen erfolgt.

Bei gegenüberliegenden Schneidpositionen erfolgt der Transport der Materialtafeln in die Schneidpositionen hinein und aus den Schneidpositionen heraus erfindungsgemäss auf parallelen Bahnen mittels zweier separater Transportvorrichtungen.

Für den Schneidvorgang ist eine Relativbewegung zwischen den zu schneidenden Materialtafeln und der Schneidvorrichtung notwendig. Bei grossen und schweren Materialtafeln ist es dabei von Vorteil, wenn die Materialtafeln während des Schneidens jeweils ortsfest gehalten werden, und mit der Schneidvorrichtung eine vorbestimmte Schnittkontur abgefahren wird, wobei vorzugsweise die Schneidvorrichtung zum Abfahren der Schnittkontur parallel zur Ebene der Materialtafel in zwei Achsen verfahren wird.

Wenn die Materialtafeln durch das Schneiden in einen Nutzen und ein übrig bleibendes Gitter unterteilt werden, ist es vorteilhaft, dass die Materialtafeln während des Schneidens im Bereich des Nutzens gehalten werden, weil dann Beschädigungen der Haltevorrichtung durch das Schneidwerkzeug, insbesondere den Laserstrahl, sicher vermieden werden. Gleichzeitig wird sichergestellt, dass der Nutzen während und nach dem Schneidvorgang unverrückbar gehalten wird.

Besonders günstig für die Handhabung der Materialtafeln nach dem Schneiden ist es, wenn beim Schneiden der Materialtafeln der Nutzen bis auf wenige schmale Verbindungsstege vom Gitter getrennt wird, und wenn Nutzen und Gitter endgültig erst voneinander getrennt werden, nachdem die geschnittene Materialtafel aus ihrer Schneidposition weitertransportiert worden ist. Nach dem endgültigen Trennen von Nutzen und Gitter können dann die Nutzen separat gesammelt und die Gitter zerkleinert und entsorgt werden.

Zum Transport der Materialtafeln werden vorzugsweise Transportvorrichtungen verwendet, in welche die Materialtafeln einhängbar sind, und die Materialtafeln werden vor dem Einhängen in die Transportvorrichtungen jeweils einem Stapel von Materialtafeln einzeln entnommen, wobei zur erleichterten Vereinzelung der Materialtafeln der Stapel von Materialtafeln aus einer horizontalen in eine schräge Lage gekippt wird.

Eine bevorzugte Ausgestaltung der erfindungsgemässen Schneidanlage ist **dadurch gekennzeichnet, dass** die Transportmittel eine der Anzahl der Schneidpositionen entsprechende Anzahl von unabhängigen Transportvorrichtungen umfassen, die jeweils einer bestimmten Schneidposition zugeordnet sind, dass die Transportvorrichtungen für den hängenden Transport der Materialtafeln ausgebildet sind, dass die Transportvorrichtungen jeweils eine umlaufende, sich in horizontaler Richtung erstreckende Kette umfassen, an welcher in gleichmässigen Abständen Vorrichtungen zum Aufhängen der Materialtafeln vorgesehen sind. Die Aufhängvorrichtungen können beispielsweise als Haken, als Klammern, als Saugvorrichtungen oder dgl. ausgebildet sein.

Wegen der Einfachheit und Platzersparnis sind die Schneidpositionen vorzugsweise in einer Schneidzelle um die Schneidvorrichtung herum angeordnet, und die Transportvorrichtungen sind durch die Schneidzelle hindurchgeführt, wobei insbesondere in der Schneidzelle zwei Schneidpositionen einander gegenüberliegend angeordnet sind, derart, dass die Schneidpositionen durch eine 180°-Rotation um eine vertikale Achse ineinander überführt werden können, und wobei jeder Schneidposition eine Transportvorrichtung zugeordnet ist, welche Transportvorrichtungen parallel zueinander verlaufen.

Wenn die beiden Transportvorrichtungen die Materialtafeln in dieselbe Richtung transportieren, lassen sich vorteilhafterweise weitere Stationen für die Handhabung der Materialtafeln für beide Transportvorrichtungen gemeinsam benutzen. Insbesondere ist in Transportrichtung vor der Schneidzelle eine Beladestation zum unabhängigen Beladen der beiden Transportvorrichtungen mit Materialtafeln, und nach der Schneidzelle eine Entladestation zum unabhängigen Entnehmen der aus den Materialtafeln ausgeschnittenen Nutzen aus beiden Transportvorrichtungen angeordnet.

In der Beladestation ist dabei jeder der beiden Transportvorrichtungen jeweils eine einzeln steuerbare, vorzugsweise quer zur Transportrichtung verfahrbare Beladevorrichtung zugeordnet, welche Materialtafeln von einem Stapel einzeln aufnimmt und an die zugehörige Transportvorrichtung hängt, wobei an den Beladevorrichtungen jeweils wenigsten zwei Palettentransportvorrichtungen vorgesehen sind, mittels derer den Beladevorrichtungen auf verschiedenen Wegen Paletten mit Stapeln von Materialtafeln zugeführt werden können.

In der Entladestation ist dabei jeder der beiden Transportvorrichtungen jeweils eine einzeln steuerbare, vorzugsweise quer zur Transportrichtung verfahrbare Entladevorrichtung zugeordnet, welche der zugehörigen Transportvorrichtung die ausgeschnittenen Nutzen entnimmt und zu einem Stapel aufstapelt, wobei an den Entladevorrichtungen jeweils wenigsten zwei Palettentransportvorrichtungen vorgesehen sind, mittels derer von den Entladevorrichtungen auf verschiedenen Wegen Paletten mit Stapeln von Nutzen abtransportiert werden können.

Weiterhin ist mit Vorteil in Transportrichtung hinter der Entladestation eine Entsorgungsstation für die Entsorgung der beim Schneiden übrigbleibenden Gitter angeordnet ist, die eine Shreddervorrichtung zum Zerkleinern der Gitter umfasst.

Gemäss einer anderen bevorzugten Ausgestaltung ist in der Schneidzelle als Mittel zum Halten der zu schneidenden Materialtafeln für jede Schneidposition eine Halte- und Positioniervorrichtung vorgesehen, welche die zu schneidende Materialtafel im Bereich des Nutzens hält und gegen einen Anschlag drückt.

Gemäss einer weiteren bevorzugten Ausgestaltung ist im Bereich der Beladevorrichtungen jeweils eine Kippvorrichtung zum Ankippen der mit den Stapeln von Materialtafeln bestückten Paletten angeordnet.

Die Schneidvorrichtung ist vorzugsweise als Laserschneidvorrichtung ausgebildet. Sie umfasst insbesondere eine Laserquelle, eine Umlenkeinrichtung und einen Schneidkopf, wobei der Schneidkopf zwischen den Schneidpositionen und parallel zu den in den in der Schneidposition befindlichen Materialtafeln verfahrbar angeordnet ist, und das Laserlicht aus der oberhalb der Transportmittel bzw. Transportvorrichtungen befindlichen Laserquelle durch die Umlenkeinrichtung in den Schneidkopf umgelenkt wird.

Zum Anfahren verschiedener Schneidpositionen ist vorzugsweise im Schneidkopf der Laserstrahl auf die verschiedenen Schneidpositionen umlenkbar. Es ist aber auch denkbar, dass der Schneidkopf mit dem Laserstrahl zu den verschiedenen Schneidpositionen hin verschwenkbar ist.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in perspektivischer Ansicht ein vereinfachtes Schema einer Schneidanlage gemäss einem bevorzugten Ausführungsbeispiel der Erfindung;
- Fig. 2: in der Draufsicht von schräg oben ein weiteres Ausführungsbeispiel einer erfindungsgemässen Schneidanlage in einer detaillierteren Darstellung:
- Fig. 3: die Anlage aus Fig. 2 in der senkrechten Draufsicht von oben; und
- Fig. 4: die Seitenansicht der Anlage aus Fig. 2.

### WEGE ZUR AUSFÜHRUNG DER ERFINDUNG

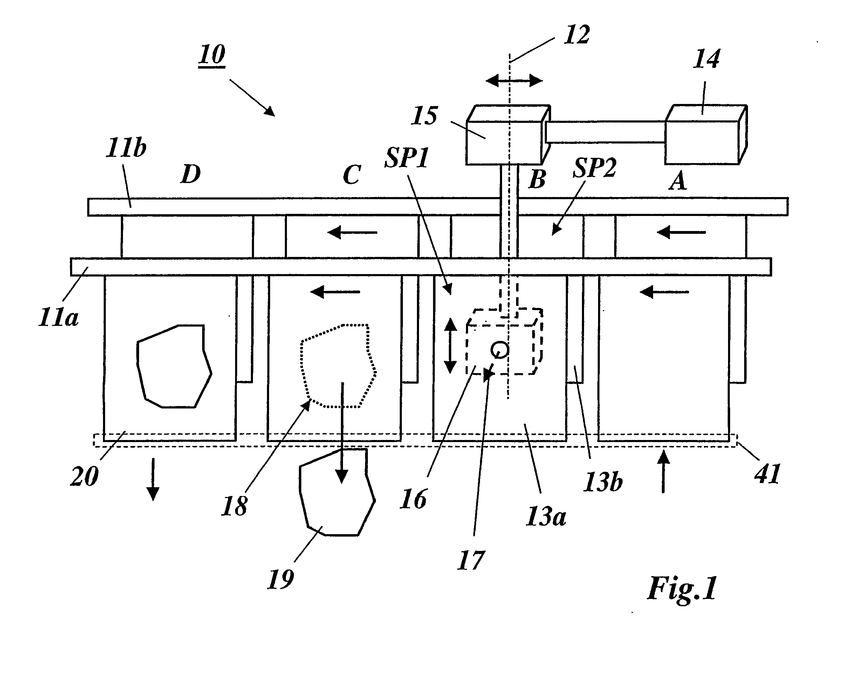

In Fig. 1 ist in perspektivischer Ansicht ein vereinfachtes Schema einer Schneidanlage gemäss einem bevorzugten Ausführungsbeispiel der Erfindung wiedergegeben. Die Schneidanlage 10 umfasst in einer geraden Linie hintereinander angeordnet vier Anlagenteile, nämlich eine Beladestation A, die eigentliche Schneidzelle B, eine Entladestation C und eine Entsorgungsstation D. Durch die Schneidanlage 10 und damit durch alle Stationen A,..,D hindurch verlaufen parallel zwei Transportvorrichtungen 11a und 11b, die für den hängenden Transport der zu schneidenden Materialtafeln 13a,b ausgelegt sind. Die Materialtafeln 13a,b, beispielsweise Aluminium- oder Stahlbleche, die meist rechteckig sind und Kantenabmessungen im Meterbereich aufweisen, sind lösbar an den Transportvorrichtungen 11a,b aufgehängt. Dazu können die Materialtafeln 13a,b im Bereich der oberen Kante mit mehreren über die Kantenlänge verteilt angeordneten Löchern versehen sein, mit denen sie in entsprechende, an den Transportvorrichtungen 11a,b verteilt angebrachte Haken eingehängt sind. Die Transportvorrichtungen 11a,b können aber auch mit Klammern oder Saugnäpfen ausgestattet sein, mit denen die Materialtafeln festgehalten werden können. Die Transportvorrichtungen 11a,b transportieren die eingehängten Materialtafeln 13a,b in derselben Transportrichtung, die in Fig. 1 durch die eingezeichneten Pfeile markiert ist und von rechts nach links verläuft. Die Transportvorrichtungen 11a,b arbeiten unabhängig voneinander, so dass in der Transportvorrichtung 11a die Materialtafeln 13a gerade weitertransportiert werden, während die Transportvorrichtung 11b still steht, und umgekehrt.

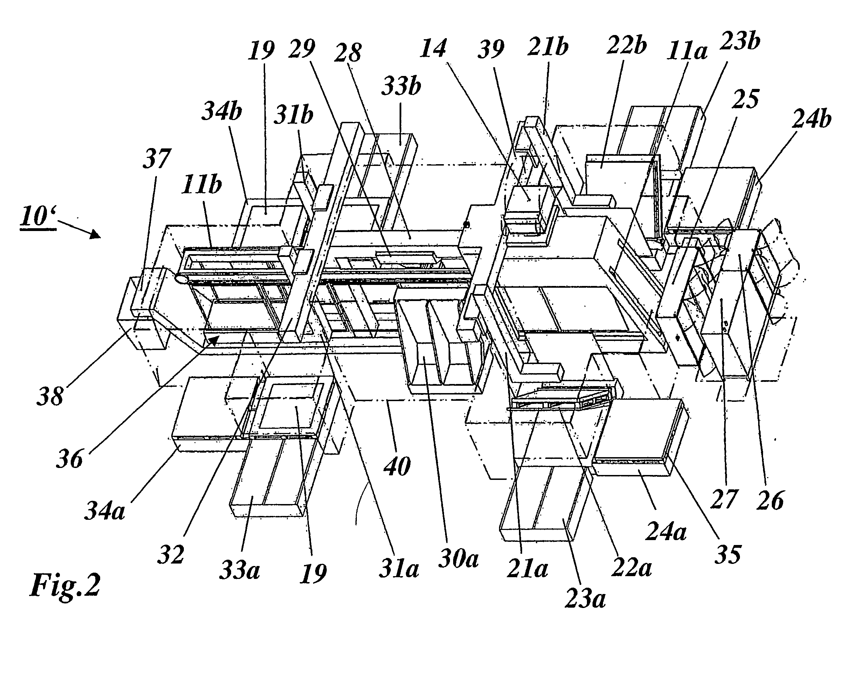

In der Beladestation A werden die Materialtafeln durch eine in Fig. 1 nicht eingezeichnete Beladevorrichtung (21a,b in Fig. 2) pro Transportrichtung von einem bereitgehaltenen Stapel von Materialtafeln einzeln entnommen, in die senkrechte Position geschwenkt und dann an die zugehörige Transportvorrichtung 11a bzw. 11b gehängt. Die Beladung der beiden Transportvorrichtungen 11a,b erfolgt abwechselnd. Während die eine Transportvorrichtung stillt steht, um eine Bearbeitung der in der Schneidzelle B befindlichen Materialtafel zu ermöglichen, bewegt die jeweils andere Transportvorrichtung die an ihr hängenden Materialtafeln in Transportrichtung um eine Station weiter und stellt so in der Beladestation Platz zum Anhängen einer neuen Materialtafel bereit. Gleichzeitig wird durch dieselbe Transportvorrichtung eine bereits geschnittene Materialtafel aus der Schneidzelle B in die Entladestation C transportiert und eine ungeschnittene Materialtafel von der Beladestation A in die Schneidzelle B überführt. Auf diese Weise steht in der Schneidzelle B rechtzeitig eine ungeschnittene Materialtafel bereit, wenn der Schneidvorgang an der anderen Materialtafel beendet ist.

In der Schneidzelle B nehmen die Materialtafeln 13a,b an den beiden Transportvorrichtungen 11a,b hängend zwei unterschiedliche Schneidpositionen SP1 und SP2 ein, die sich bezüglich einer Mittelebene genau spiegelsymmetrisch gegenüberliegen bzw. durch eine Drehung um 180°um eine in der Mitte dazwischen liegende vertikale Achse 12 ineinander überführt werden können. Zwischen den Schneidpositionen SP1 und SP2 ist ein Schneidkopf 1.6 angeordnet, der in einer parallel zu den Materialtafeln 13a,b liegenden Ebene in zwei Achsen (Doppelpfeile in Fig. 1.) verfahrbar ist. Aus dem Schneidkopf 16 tritt seitlich ein horizontaler Laserstrahl 17 aus, der auf die zu schneidende Materialtafel (13a in Fig. 1) trifft und aufgrund des vom Schneidkopf 16 zurückgelegten, vorprogrammierten Verfahrweges eine entsprechende Schnittkontur 18 in der Materialtafel 13a hinterlässt. Der Laserstrahl 17 hat seinen Ursprung in einer oberhalb der beiden Transportvorrichtungen 11a,b angeordneten Laserquelle 14, die einen geeigneten Laser entsprechender Leistung enthält, wie er aus dem Stand der Technik bekannt ist. Das Laserlicht aus der Laserquelle 14 wird über eine erste nach aussen abgeschlossene Strahlführung 43 in Transportrichtung zu einer Umlenkeinrichtung 15 geführt, dort um 90 ° nach unten umgelenkt, und über eine zweite Strahlführung 44 nach unten zum Schneidkopf 16 geführt. Im Schneidkopf 16 kann der vertikal nach unten laufenden Laserstrahl durch eine weitere, umschaltbare Umlenkeinrichtung wahlweise um 90° nach links oder rechts seitlich aus dem Schneidkopf 16 herausgelenkt werden, um wahlweise eine der beiden Schneidpositionen SP1 und SP2 zu erreichen. Es versteht sich von selbst, dass im Schneidkopf 16 weitere strahlformende, z.B. strahlfokussierende Elemente und Einrichtungen vorhanden sind, wie sie für den Laserschneidbetrieb benötigt werden. Es versteht sich weiterhin, dass die beiden Strahlführungen 42 und 43 teleskopische Eigenschaften aufweisen müssen, um ein ungehindertes Verfahren des Schneidkopfes 16 zu ermöglichen. Durch ein Umschalten der im Schneidkopf 16 befindlichen Umlenkeinrichtung kann sehr schnell von einem Schneidvorgang in der einen Schneidposition auf einen Schneidvorgang in der anderen Schneidposition umgeschaltet werden, was für die Verringerung der Maschinenstillstandszeit von massgebender Bedeutung ist.

Wird - wie in Fig. 1 mit der punktierten Linie angedeutet - in der Materialtafel jeweils eine geschlossene Schnittkontur 18 erzeugt, kann der entstehende Zuschnitt bzw. Nutzen 19 nach dem Schneiden aus dem Rest bzw. Gitter 20 herausgelöst und weiterverarbeitet werden. Das Herauslösen des Nutzens 19 und Ablegen im Stapel auf einer entsprechenden Palette geschieht in der Entladestation C. Damit die in der Schneidzelle B mit der Schnittkontur 18 versehene Materialtafel ohne Schwierigkeiten und auf einfache Weise von der Schneidzelle B hängend zur Entladestation C transportiert werden kann, wird beim Schneiden der Materialtafeln 13a,b der Nutzen 19 nur bis auf wenige schmale oder Mikro-Verbindungsstege vom Gitter 20 getrennt. In oder kurz vor der Entladestation C werden die Mikro-Verbindungsstege durchtrennt und damit Nutzen 19 und Gitter 20 endgültig voneinander getrennt. Der Nutzen 19 wird mittels in Fig. 1 nicht gezeigter Entladevorrichtungen (31a,b in Fig. 2) aus der Materialtafel heraus und von der Transportvorrichtung abgenommen, während das übrigbleibende Gitter 20 von der Entladestation C in die nachfolgende Entsorgungsstation D weitertransportiert und dort zerkleinert und entsorgt wird. Zur weiteren Führung der Materialtafeln 13a,b auf Ihrem Weg von der Beladestation A zur Entsorgungsstation D können im unteren Bereich der Tafeln Führungen 41 vorgesehen werden (gestrichelt in Fig. 1 eingezeichnet), die ein Hin- und Herschwingen der an den Transportvorrichtungen 11a,b hängenden. Tafeln verhindern.

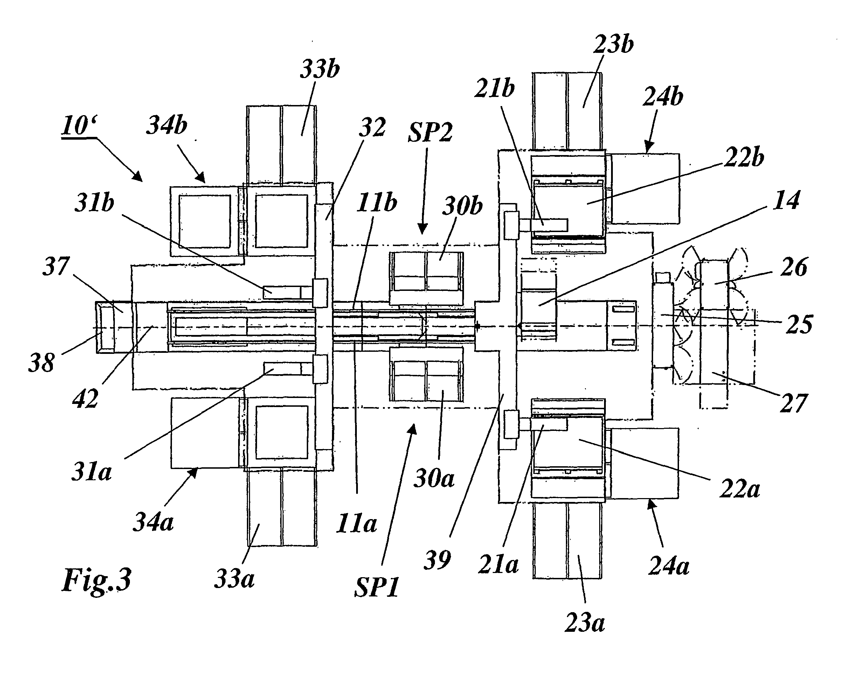

Grundsätzlich können von Materialtafel zu Materialtafel unterschiedliche Schnittkonturen 18 geschnitten werden, wenn der Verfahrweg des Schneidkopfes 16 entsprechend programmiert ist. Probleme ergeben sich dabei jedoch wegen der Halterung in der Schneidzelle B, welche die Materialtafel genau in der Schneidposition hält (Halte- und Positioniervorrichtung 30a,b in Fig. 3). Die mit Saugnäpfen bestückte Halterung ist so ausgelegt, dass sie die Materialtafel innerhalb der geplanten Schnittkontur, d.h. im Bereich des späteren Nutzens 19 festhält und gegen einen Anschlag drückt. Dabei erstreckt sich die Halterung bis dicht an die Schnittkontur 18, um die Materialtafel in diesem kritischen Bereich möglichst gut zu fixieren. Ändert sich die Schnittkontur 18, wäre es von Vorteil, auch den für die Fixierung notwendigen Teil der Halterung anzupassen, was jedoch zu einem Stillstand der Schneidanlage führen würde. Die optimale Leistung der Schneidanlage wird daher erreicht, wenn in einer Schneidposition fortlaufend jeweils dieselbe Schnittkontur 18 geschnitten wird.

Werden bei der Schneidanlage 10 aus Fig. 1 in beiden Schneidpositionen SP1 und SP2 dieselben Schnittkonturen 18 geschnitten, kann dies auf zweierlei Weise geschehen: Im einen Fall sind die Schnittkonturen in den beiden Schneidpositionen SP1 und SP2 spiegelsymmetrisch zueinander; dies hat den Vorteil, dass der Schneidkopf 16 jeweils denselben Fahrweg durchläuft. Nachteilig ist dabei, dass in der Regel für die beiden Schneidpositionen unterschiedlich ausgelegte Halterungen benötigt werden. Im anderen Fall können die Schnittkonturen durch eine Drehung um 180°und die Achse 12 ineinander überführt werden. Die Halterungen für beide Schneidpositionen sind in diesem Fall gleich; jedoch ist der Fahrweg des Schneidkopfes 16 ein anderer.

Die kontinuierliche Arbeitsweise der Schneidanlage 10 in Fig. 1 kann wie folgt beschrieben werden:
- Von der ersten Transportvorrichtung 11a wird in der Entsorgungsstation D ein Gitter 20 abgenommen und entsorgt. Gleichzeitig wird in der Entladestation C davor ein Nutzen 19 entnommen, in der Schneidzelle B in der Schneidposition SP1 eine Schnittkontur 18 geschnitten und in der Beladestation A eine neue Materialtafel angehängt.
- Währenddessen rückt die zweite Transportvorrichtung 11b um eine Station weiter und bringt eine ungeschnittene Materialtafel in die Schneidposition SP2.
- Der Schneidkopf wird von der Schneidposition SP1 auf die Schneidposition SP2 umgestellt.
- Er schneidet dort die Schnittkontur 18. Gleichzeitig wird von der Transportvorrichtung 11b in der Entsorgungsstation D ein Gitter 20 abgenommen und entsorgt, in der Entladestation C davor ein Nutzen 19 entnommen und in der Beladestation A eine neue Materialtafel angehängt.
- Die erste Transportvorrichtung 11a rückt währenddessen um eine Station weiter, so dass d eine ungeschnittene Materialtafel in die Schneidposition SP1 gelangt.
- Der Schneidkopf wird von der Schneidposition SP2 wieder auf die Schneidposition SP1 umgestellt.
- Der Ablauf beginnt von vorne.

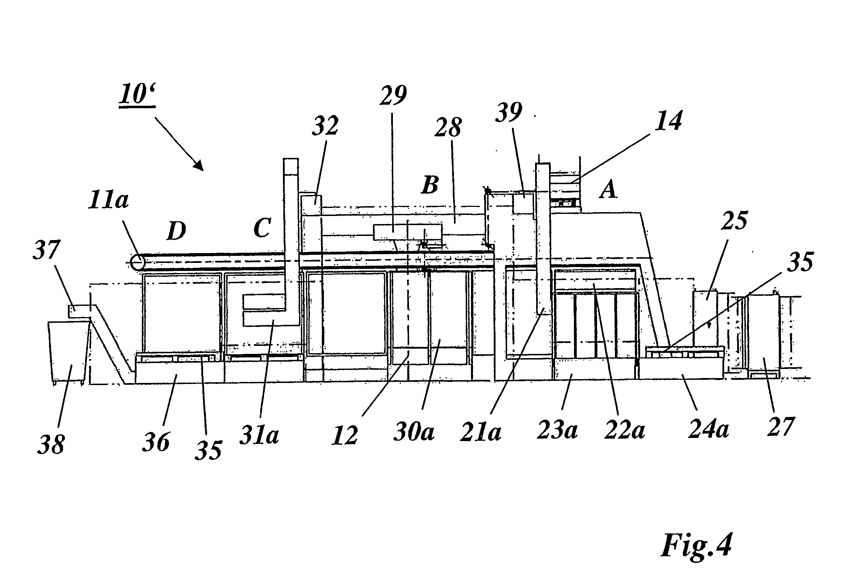

Ein detailliertes Ausführungsbeispiel einer Schneidanlage nach der Erfindung, dass dem in Fig. 1 dargestellten Prinzip genügt, ist in den Fig. 2 bis 4 wiedergegeben. Die Schneidanlage 10' hat wiederum die vier entlang einer Achse 42 hintereinander angeordneten Stationen A bis D mit der Beladestation A, der Schneidzelle B, der Entladestation C, und der Entsorgungsstation D. Die Transportvorrichtungen 11a,b sind als umlaufenden Ketten ausgebildet, in welche die Materialtafeln eingehängt werden. Oberhalb der Beladestation A ist die Laserquelle 14 angeordnet und damit für Wartungs- und Reparaturarbeiten leicht zugänglich. In der Nähe zur Laserquelle 14 und damit über kurze Leitungen mit der Laserquelle 14 verbunden, befinden sich an der Stirnseite der Anlage ein Lasersteuerschrank 26 und eine Kühleinrichtung 27. Am gleichen Platz ist auch der für die Ablaufsteuerung der Anlage notwendige Maschinensteuerschrank 25 platziert. Lasersteuerschrank 26, Kühleinrichtung 27 und Maschinensteuerschrank 25 befinden sich gut zugänglich ausserhalb einer Schutzkabine 40, welche die ganze Anlage umschliesst und in Fig. 2-4 durch eine strichpunktierte Linie angedeutet ist. In der Beladestation A sind auf beiden Seiten jeweils seitlich zwei rechtwinklig zueinander angeordnete Palettentransportvorrichtungen 23a, 24a und 23b, 24b vorgesehen, mit denen abwechselnd Paletten 35 mit Stapeln von ungeschnittenen Materialtafeln zugeführt bzw. leere Paletten abgeführt werden können. Hierdurch werden Verzögerungen durch einen Palettenwechsel sicher vermieden. Die Materialtafeln werden von dem auf der Palette 35 liegenden Stapel einzeln mittels einer Beladevorrichtung 21a,b abgenommen und an die Transportvorrichtung 11a,b gehängt. Die Beladevorrichtung 21a,b ist jeweils als an einem Querbalken 39 quer zur Transportrichtung verfahrbarer und schwenkbarer, abgewinkelter Arm ausgebildet, der am Ende (nicht dargestellte) Saugvorrichtungen zum Festsaugen an den Tafeln aufweist. Damit die Materialtafeln leichter vom Stapel abgenommen werden können, werden die Paletten mit den Stapeln mittels einer Kippvorrichtung 22a,b für die Entnahme schräg gestellt, wie dies in Fig. 2 zu sehen ist.

Die in der Beladestation A an die Ketten der Transportvorrichtungen 11a,b angehängten Materialtafeln werden dann hängend von der Beladestation A in die nachfolgende Schneidzelle B transportiert, wo sie von den dort vorgesehenen Halte- und Positioniervorrichtungen 30a,b in die durch einen Anschlag festgelegte exakte Schneidposition gebracht und dort gehalten werden. Zwischen den beiden Halte- und Positioniervorrichtungen 30a,b ist der (in den Fig. 2-4 nicht sichtbare) mit Laserlicht arbeitende Schneidkopf verfahrbar angeordnet. Das Verfahren des Schneidkopfes in Transportrichtung (Achse 42) wird durch einen Transportschlitten 29 gewährleistet, an dem der Schneidkopf befestigt ist, und der an einem Portal 28 verfahrbar angeordnet ist. Wie bereits erwähnt, werden die Materialtafeln in den Halte- und Positioniervorrichtungen 30a,b mittels innerhalb der späteren Schnittkontur verteilt angeordneten Saugnäpfen gehalten und gegen einen Anschlag gepresst, der auf die Schnittkontur abgestimmt ist. Ist die Materialtafel geschnitten, wird sie mit dem an den Mikro-Verbindungstegen hängenden Nutzen von der Schneidzelle B in die nachfolgende Entladestation C weitertransportiert. In der Entladestation C werden die Mikro-Verbindungsstege durchtrennt und so der Nutzen 19 vom Rest der Materialtafel, dem Gitter 20, endgültig getrennt. Während das Gitter 20 an der Transportvorrichtung 11a,b hängen bleibt, wird der abgetrennte Nutzen 19 mittels einer Entladevorrichtung 31a,b seitlich abgenommen und auf einer bereitstehenden Palette stapelnd abgelegt. Die Entladevorrichtungen 31a,b sind ähnlich aufgebaut und ausgelegt, wie die weiter oben beschriebenen Beladevorrichtungen 21a,b, und sind ebenfalls an einem Querbalken 32 quer zur Transportrichtung verfahrbar und schwenkbar. Sie arbeiten ebenfalls mit Saugnäpfen. Analog zur Beladestation A und aus den gleichen Gründen sind auch in der Entladestation C jeweils zwei rechtwinklig zueinander angeordnete Palettentransportvorrichtungen 33a, 34a und 33b, 34b vorgesehen, mit denen abwechselnd Paletten 35 mit Stapeln von geschnittenen Nutzen 19 abgeführt bzw. leere Paletten zugeführt werden können.

In der hinter der Entladestation C angeordneten Entsorgungsstation D, in der die Transportvorrichtungen 11a,b enden, werden die übriggebliebenen Gitter 20 von den Transportvorrichtungen 11a,b abgehängt oder abgeworfen und fallen in eine unterhalb der Transportvorrichtungen 11a,b liegende Shreddervorrichtung 36, in der sie zerkleinert werden. Die aus der Shreddervorrichtung 36 kommenden Teile werden mittels einer darunter befindlichen Abfalltransportvorrichtung 37 in Form einer Förderbandes oder dgl. abtransportiert und gelangen so in eine am Ende der Schneidanlage 10' stehenden Abfallcontainer 38. Die Abfalltransportvorrichtung 37 reicht vorzugsweise nicht nur bis unter die Entsorgungsstation D, sondern bis unter die Schneidzelle B. Auf diese Weise können gleichzeitig auch kleine Abfälle abtransportiert werden, die direkt beim Schneiden in der Schneidzelle B entstehen und nach unten herausfallen.

Obgleich die Erfindung am Beispiel einer mit Laser arbeitenden Schneidanlage mit zwei gegenüberliegenden Schneidpositionen erläutert worden ist, lassen sich im Rahmen der Erfindung zahllose Abänderungen bzw. Erweiterungen finden. So kann beispielsweise anstelle eines Laserschneidverfahrens ein anderes thermisches Schneidverfahren oder ein mit Wasserstrahl arbeitendes Schneidverfahren verwendet werden.

### BEZUGSZEICHENLISTE

- 10, 10': Schneidanlage
- 11a,b: Transportvorrichtung
- 12,42: Achse
- 13a,b: Materialtafel (Metallblech)
- 14: Laserquelle
- 15: Umlenkeinrichtung
- 16: Schneidkopf
- 17: Laserstrahl
- 18: Schnittkontur
- 19: Nutzen
- 20: Gitter
- 21a,b: Beladevorrichtung
- 22a,b: Kippvorrichtung
- 23a,b: Palettentransportvorrichtung
- 24a,b: Palettentransportvorrichtung
- 25: Maschinensteuerschrank
- 26: Lasersteuerschrank
- 27: Kühleinrichtung
- 28: Portal
- 29: Transportschlitten
- 30a,b: Halte- und Positioniervorrichtung
- 31a,b: Entladevorrichtung
- 32,39: Querbalken
- 33a,b: Palettentransportvorrichtung
- 34a,b: Palettentransportvorrichtung
- 35: Palette
- 36: Shreddervorrichtung
- 37: Abfalltransportvorrichtung
- 38: Abfallcontainer
- 40: Schutzkabine
- 41: Führung
- 43,44: Strahlführung
- A: Beladestation
- B: Schneidzelle
- C: Entladestation
- D: Entsorgungsstation
- SP1,2: Schneidposition

## Patentansprüche

1. Verfahren zum Schneiden von Materialtafeln (13a, 13b); insbesondere Metallblechen, bei welchem Verfahren die zu schneidenden Materialtafeln (13a, 13b) zunächst in eine vertikale Schneidposition (SP1, SP2) gebracht und anschliessend mittels einer Schneidvorrichtung (14, 15, 16) von einer Seite geschnitten werden, wobei die Materialtafeln (13a, 13b) zum Schneiden in zwei unterschiedliche, von der Schneidvorrichtung (14, 15, 16) erreichbare Schneidpositionen (SP1, SP2) gebracht und nacheinander geschnitten werden,
**dadurch gekennzeichnet, dass**
dass nur zwei Schneidpositionen (SP1, SP2) um eine vertikale Achse (12) herum rotationssymmetrisch angeordnet sind und dass die Schnichvorrichtung (14, 15, 16) zum Erreichen der nächsten Schneidposition (SP1, SP2) bezüglich der Achse (12) entsprechend unstellt wird, und daß diese zwei Schneidposition (SP1, SP2) durch eine 180°-Rotation um die vertikale Achse (12) ineinander überführbar sind.

2. Verfahren nach Anspruch 1, **dadurch gekennzeichnet, dass,** während eine erste Materialtafel (13a) in einer ersten Schneidposition (SP1, SP2) geschnitten wird, eine zweite Materialtafel (13b) in eine zweite Schneidposition (SP2, SP1) gebracht wird, und dass nach dem Schneiden der ersten Materialtafel (13a) die Schneidvorrichtung (14, 15, 16) auf die zweite Schneidposition (SP2, SP1) eingestellt und die zweite Materialtafel (13b) geschnitten wird.

3. Verfahren nach Anspruch 2, **dadurch gekennzeichnet, dass** der Wechsel zwischen den Schneidpositionen (SP1, SP2) periodisch erfolgt, und dass, bevor eine neue Materialtafel zum Schneiden in eine Schneidposition (SP1, SP2) gebracht wird, eine vorher in dieser Schneidposition (SP1, SP2) geschnittene Materialplatte aus dieser Schneidposition (SP1, SP2) entfernt wird.

4. Verfahren nach einem der Ansprüche 1 bis 3, **dadurch gekennzeichnet, dass** zum Schneiden ein Laserstrahl (17) verwendet wird, und dass zum Wechseln zwischen den Schneidpositionen (SP1, SP2) der Laserstrahl (17) entsprechend umgelenkt wird.

5. Verfahren nach einem der Ansprüche 1 bis 4, **dadurch gekennzeichnet, dass** die Materialtafeln (13a, 13b) in die Schneidpositionen (SP1, SP2) hinein und aus den Schneidpositionen (SP1, SP2) heraus hängend transportiert werden.

6. Verfahren nach Anspruch 5, **dadurch gekennzeichnet, dass** der Transport der Materialtafeln (13a, 13b) auf geraden Bahnen erfolgt.

7. Verfahren nach Anspruch 3 und 6, **dadurch gekennzeichnet, dass** der Transport der Materialtafeln (13a, 13b) in die Schneidpositionen (SP1, SP2) hinein und aus den Schneidpositionen heraus auf parallelen Bahnen mittels zweier separater Transportvorrichtungen (11a, 11b) erfolgt.

8. Verfahren nach einem der Ansprüche 1 bis 7, **dadurch gekennzeichnet, dass** die Materialtafeln (13a, 13b) während des Schneidens jeweils ortsfest gehalten werden, und dass mit der Schneidvorrichtung (14, 15, 16) eine vorbestimmte Schnittkontur (18) abgefahren wird.

9. Verfahren nach Anspruch 8, **dadurch gekennzeichnet, dass** zum Abfahren der Schnittkontur (18) die Schneidvorrichtung (14, 15, 16) parallel zur Ebene der Materialtafel (13a, 13b ) in zwei Achsen verfahren wird.

10. Verfahren nach Anspruch 8, **dadurch gekennzeichnet, dass** die Materialtafeln (13a, 13b) durch das Schneiden in einen Nutzen (19) und ein übrig bleibendes Gitter (20) unterteilt werden, und dass die Materialtafeln (13a, 13b) während des Schneidens im Bereich des Nutzens (19) gehalten werden.

11. Verfahren nach Anspruch 10, **dadurch gekennzeichnet, dass** beim Schneiden der Materialtafeln (13a,13b) der Nutzen (19) bis auf wenige schmale Verbindungsstege vom Gitter (20) getrennt wird, und dass Nutzen (19) und Gitter (20) endgültig erst voneinander getrennt werden, nachdem die geschnittene Materialtafel aus ihrer Schneidposition (SP1, SP2) weitertransportiert worden ist.

12. Verfahren nach Anspruch 11, **dadurch gekennzeichnet, dass** nach dem endgültigen Trennen von Nutzen (19) und Gitter (20) die Nutzen (19) separat gesammelt und die Gitter (20) zerkleinert und entsorgt werden.

13. Verfahren nach Anspruch 5, **dadurch gekennzeichnet, dass** zum Transport der Materialtafeln (13a, 13b) Transportvorrichtungen (11a, 11b) verwendet werden, in welche die Materialtafeln (13a,b) einhängbar sind, und dass die Materialtafeln (13a, 13b) vor dem Einhängen in die Transportvorrichtungen (11a, 11b) jeweils einem Stapel von Materialtafeln einzeln entnommen werden.

14. Verfahren nach Anspruch 13, **dadurch gekennzeichnet, dass** zur Vereinzelung der Materialtafeln (13a, 13b) der Stapel von Materialtafeln aus einer horizontalen in eine schräge Lage gekippt wird.

15. Schneidanlage (10, 10') zur Durchführung des Verfahrens nach einem der vorangehenden Ansprüche, umfassend erste Mittel (30a, 30b) zum Halten der zu schneidenden Materialtafeln (13a, 13b) in einer vertikalen Schneidposition (SP1, SP2), zweite Mittel (11a, 11b) zum Transportieren der Materialtafeln (13a, 13b) zur vertikalen Schneidposition (SP1, SP2) und aus der vertikalen Schneidposition (SP1, SP2), sowie eine in seitlicher Richtung arbeitende Schneidvorrichtung (14, 15, 16) zum Schneiden von in der vertikalen Schneidposition (SP1, SP2) befindlichen Materialtafeln, wobei zwei unterschiedliche, von den Transportmitteln (11a, 11b) anfahrbare Schneidpositionen (SP1, SP2) vorgesehen sind, die Schneidvorrichtung (14, 15, 16) auf die zwei unterschiedlichen Schneidpositionen (SP1, SP2) jeweils einstellbar ist und jeder Schneidposition (SP1, SP2) eine Transportvorrichtung (11a, 11b) zugeordnet ist, welche Transportvorrichtungen (11a, 11b) parallel zueinander verlaufen,
**dadurch gekennzeichnet, dass**
die Schneidpositionen (SP1, SP2) in einer Schneidzelle (B) um die Schneidvorrichtung (14, 15, 16) herum einander gegenüberliegend angeordnet und durch eine 180°-Rotation um eine vertikale Achse (12) ineinander überführbar sind, und dass die Transportvorrichtungen (11a, 11b) durch die Schneidzelle (B) hindurchgeführt sind.

16. Schneidanlage nach Anspruch 15, **dadurch gekennzeichnet, dass** die Transportmittel eine der Anzahl der Schneidpositionen (SP1, SP2) entsprechende Anzahl von unabhängigen Transportvorrichtungen (11a, 11b) umfassen, die jeweils einer bestimmten Schneidposition (SP1, SP2) zugeordnet sind.

17. Schneidanlage nach Anspruch 16, **dadurch gekennzeichnet, dass** die Transportvorrichtungen (11a, 11b) für den hängenden Transport der Materialtafeln (13a,b) ausgebildet sind.

18. Schneidanlage nach Anspruch 17, **dadurch gekennzeichnet, dass** die Transportvorrichtungen (11a, 11b) jeweils eine umlaufende, sich in horizontaler Richtung erstreckende Kette umfassen, an welcher in gleichmässigen Abständen Vorrichtungen zum Aufhängen der Materialtafeln (13a, 13b) vorgesehen sind.

19. Schneidanlage nach Anspruch 18, **dadurch gekennzeichnet, dass** die beiden Transportvorrichtungen (11a, 11b) die Materialtafeln (13a, 13b) in dieselbe Richtung transportieren.

20. Schneidanlage nach Anspruch 19, **dadurch gekennzeichnet, dass** in Transportrichtung vor der Schneidzelle (B) eine Beladestation (A) zum Beladen der unabhängigen Beladen der beiden Transportvorrichtungen (11a, 11b) mit Materialtafeln (13a,b), und nach der Schneidzelle (B) eine Entladestation (C) zum unabhängigen Entnehmen der aus den Materialtafeln (13a, 13b) ausgeschnittenen Nutzen (19) aus beiden Transportvorrichtungen (11a, 11b) angeordnet ist.

21. Schneidanlage nach Anspruch 20, **dadurch gekennzeichnet, dass** in der Beladestation (A) jeder der beiden Transportvorrichtungen (11a, 11b) jeweils eine einzeln steuerbare, vorzugsweise quer zur Transportrichtung verfahrbare Beladevorrichtung (21a, 21b) zugeordnet ist, welche Materialtafeln von einem Stapel einzeln aufnimmt und an die zugehörige Transportvorrichtung hängt.

22. Schneidanlage nach Anspruch 21, **dadurch gekennzeichnet, dass** an den Beladevorrichtungen (21a, 21b) jeweils wenigsten zwei Palettentransportvorrichtungen (23a, 24a bzw. 23b, 24b) vorgesehen sind, mittels derer den Beladevorrichtungen (21a, 21b) auf verschiedenen Wegen Paletten (35) mit Stapeln von Materialtafeln zugeführt werden können.

23. Schneidanlage nach Anspruch 20, **dadurch gekennzeichnet, dass** in der Entladestation (C) jeder der beiden Transportvorrichtungen (11a, 11b) jeweils eine einzeln steuerbare, vorzugsweise quer zur Transportrichtung verfahrbare Entladevorrichtung (31a, 31b) zugeordnet ist, welche der zugehörigen Transportvorrichtung die ausgeschnittenen Nutzen (19) entnimmt und zu einem Stapel aufstapelt.

24. Schneidanlage nach Anspruch 23, **dadurch gekennzeichnet, dass** an den Entladevorrichtungen (31a, 31b) jeweils wenigsten zwei Palettentransportvorrichtungen (33a, 34a bzw. 33b, 34b) vorgesehen sind, mittels derer von den Entladevorrichtungen (31a, 31b) auf verschiedenen Wegen Paletten (35) mit Stapeln von Nutzen (19) abtransportiert werden können.

25. Schneidanlage nach einem der Ansprüche 20 bis 25, **dadurch gekennzeichnet, dass** in Transportrichtung hinter der Entladestation (C) eine Entsorgungsstation (D) für die Entsorgung der beim Schneiden übrigbleibenden Gitter (20) angeordnet ist.

26. Schneidanlage nach Anspruch 25, **dadurch gekennzeichnet, dass** die Entsorgungsstation (D) eine Shreddervorrichtung (36) zum Zerkleinern der Gitter (20) umfasst.

27. Schneidanlage nach einem der Ansprüche 17 bis 26, **dadurch gekennzeichnet, dass** in der Schneidzelle (B) als Mittel (30a, 30b) zum Halten der zu schneidenden Materialtafeln (13a,b) für jede Schneidposition (SP1, SP2) eine Halte- und Positioniervorrichtung (30a,b) vorgesehen ist, welche die zu schneidende Materialtafel im Bereich des Nutzens (19) hält und gegen einen Anschlag drückt.

28. Schneidanlage nach Anspruch 21 oder 22, **dadurch gekennzeichnet, dass** im Bereich der Beladevorrichtungen (21a, 21b) jeweils eine Kippvorrichtung (22a,b) zum Ankippen der mit den Stapeln von Materialtafeln bestückten Paletten angeordnet ist.

29. Schneidanlage nach einem der Ansprüche 13 bis 28, **dadurch gekennzeichnet, dass** die Schneidvorrichtung (14, 15, 16) als Laserschneidvorrichtung ausgebildet ist.

30. Schneidanlage nach Anspruch 29, **dadurch gekennzeichnet, dass** die Schneidvorrichtung (14, 15, 16) eine Laserquelle (14), eine Umlenkeinrichtung (15) und einen Schneidkopf (16) umfasst, wobei der Schneidkopf (16) zwischen den Schneidpositionen (SP1, SP2) und parallel zu den in den in der Schneidposition (SP1, SP2) befindlichen Materialtafeln (13a, 13b) verfahrbar angeordnet ist, und das Laserlicht aus der oberhalb der Transportmittel bzw. Transportvorrichtungen (11a, 11b) befindlichen Laserquelle (14) durch die Umlenkeinrichtung (15) in den Schneidkopf (16) umgelenkt wird.

31. Schneidanlage nach Anspruch 30, **dadurch gekennzeichnet, dass** im Schneidkopf (16) der Laserstrahl auf die verschiedenen Schneidpositionen (SP1, SP2) umlenkbar ist.

32. Schneidanlage nach Anspruch 30, **dadurch gekennzeichnet, dass** der Schneidkopf (16) mit dem Laserstrahl (17) zu den verschiedenen Schneidpositionen (SP1, SP2) hin verschwenkbar ist.

## Claims

1. A method for cutting material plates (13a, 13b), especially metal sheets, in which method the material plates (13a, 13b) to be cut are first of all brought into a vertical cutting position (SP1, SP2) and are then cut from the side by means of a cutting device (14, 15, 16), wherein the material plates (13a, 13b), for cutting, are brought into two different cutting positions (SP1, SP2) which can be reached by the cutting device (14, 15, 16) and are cut one after the other, **characterized in that** only two cutting positions (SP1, SP2) are arranged in a rotationally symmetrical manner about a vertical axis (12), and **in that** the cutting device (14, 15, 16) is correspondingly adjusted with respect to the axis (12) for reaching the next cutting position, and **in that** these two cutting positions (SP1, SP2) can be shifted one into the other by a 180° rotation about the vertical axis (12).

2. The method as claimed in claim 1, **characterized in that,** while a first material plate (13a) is being cut in a first cutting position (SP1, SP2), a second material plate (13b) is brought into a second cutting position (SP2, SP1), and **in that**, after the cutting of the first material plate (13a), the cutting device (14, 15, 16) is set to the second cutting position (SP2, SP1) and the second material plate (13b) is cut.

3. The method as claimed in claim 2, **characterized in that** the change between the cutting positions (SP1, SP2) is effected periodically, and **in that**, before a new material plate is brought into a cutting position (SP1, SP2) for cutting, a material plate cut beforehand in this cutting position (SP1, SP2) is removed from this cutting position (SP1, SP2).

4. The method as claimed in one of claims 1 to 3,
**characterized in that** a laser beam (17) is used for the cutting, and **in that** the laser beam (17) is correspondingly deflected for changing between the cutting positions (SP1, SP2).

5. The method as claimed in one of claims 1 to 4, **characterized in that** the material plates (13a, 13b) are transported into the cutting positions (SP1, SP2) and out of the cutting positions (SP1, SP2) in a suspended manner.

6. The method as claimed in claim 5, **characterized in that** the transport of the material plates (13a, 13b) is effected on straight paths.

7. The method as claimed in claims 3 and 6, **characterized in that** the transport of the material plates (13a, 13b) into the cutting positions (SP1, SP2) and out of the cutting positions is effected on parallel paths by means of two separate transport devices (11a, 11b).

8. The method as claimed in one of claims 1 to 7, **characterized in that** the material plates (13a, 13b) are each held in a fixed position during the cutting, and **in that** the cutting device (14, 15, 16) travels along a predetermined cutting contour (18).

9. The method as claimed in claim 8, **characterized in that,** to travel along the cutting contour (18), the cutting device (14, 15, 16) is traversed parallel to the plane of the material plate (13a, 13b) in two axes.

10. The method as claimed in claim 8, **characterized in that** the material plates (13a, 13b) are divided into a blank (19) and a remaining grid (20) by the cutting, and **in that** the material plates (13a, 13b) are held in the region of the blank (19) during the cutting.

11. The method as claimed in claim 10, **characterized in that,** during the cutting of the material plates (13a, b), the blank (19) is separated from the grid (20) except for a few narrow connecting webs, and **in that** the blank (19) and the grid (20) are only finally separated from one another once the cut material plate has been transported further from its cutting position (SP1, SP2).

12. The method as claimed in claim 11, **characterized in that,** after the final separation of the blank (19) and the grid (20), the blanks (19) are collected separately and the grids (20) are cut up and disposed of.

13. The method as claimed in claim 5, **characterized in that** transport devices (11a, b) in which the material plates (13a, 13b) can be suspended are used for transporting the material plates (13a, 13b), and **in that** the material plates (13a, 13b) are each individually removed from a stack of material plates before being suspended in the transport devices (11a, 11b).

14. The method as claimed in claim 13, **characterized in that** the stack of material plates is tilted from a horizontal position into an inclined position in order to singularize the material plates (13a, 13b).

15. A cutting system (10, 10') for carrying out the method as claimed in one of the preceding claims, comprising first means (30a, b) for holding the material plates (13a, 13b) to be cut in a vertical cutting position (SP1, SP2), second means (11a, 11b) for transporting the material plates (13a, 13b) to the vertical cutting position (SP1, SP2) and from the vertical cutting position (SP1, SP2), and a cutting device (14, 15, 16) working in a lateral direction for cutting material plates located in the vertical cutting position (SP1, SP2), wherein two different cutting positions (SP1, SP2) are provided which can be approached by the transport means (11a, 11b), and the cutting device (14, 15, 16) can be set in each case to the two different cutting positions (SP1, SP2), and that a transport device (11a, 11b) is assigned to each cutting position (SP1, SP2), which transport devices (11a, 11b) run parallel to one another, **characterized in that** the cutting positions (SP1, SP2) are arranged around the cutting device (14, 15, 16) and opposite one another in a cutting cell (B) and can be shifted one into the other by a 180° rotation about a vertical axis (12), and **in that** the transport devices (11a, 11b) are directed through the cutting cell (B).

16. The cutting system as claimed in claim 15, **characterized in that** the transport means comprise a number of independent transport devices (11a, b) corresponding to the number of cutting positions (SP1, SP2), which transport devices (11a, 11b) are each assigned to a certain cutting position (SP1, SP2).

17. The cutting system as claimed in claim 16, **characterized in that** the transport devices (11a, 11b) are designed for the suspended transport of the material plates (13a, 13b).

18. The cutting system as claimed in claim 17, **characterized in that** the transport devices (11a, 11b) each comprise a revolving chain which extends horizontally and on which devices for suspending the material plates (13a, 13b) are provided at uniform distances apart.

19. The cutting system as claimed in claim 18, **characterized in that** the two transport devices (11a, 11b) transport the material plates (13a, 13b) in the same direction.

20. The cutting system as claimed in claim 19, **characterized in that** a loading station (A) for the independent loading of the two transport devices (11a, 11b) with material plates (13a, 13b) is arranged in the transport direction upstream of the cutting cell (B), and an unloading station (C) for the independent removal of the blanks (19) cut out of the material plates (13a, 13b) from both transport devices (11a, 11b) is arranged downstream of the cutting cell (B).

21. The cutting system as claimed in claim 20, **characterized in that** a respective individually controllable loading device (21a, 21b) preferably traversable transversely to the transport direction is assigned in the loading station (A) to each of the two transport devices (11a, 11b), which loading device (21a, b) receives material plates individually from a stack and hangs them on the associated transport device.

22. The cutting system as claimed in claim 21, **characterized in that** at least two respective pallet transport devices (23a, 24a and 23b, 24b) are provided on the loading devices (21a, 21b), by means of which pallet transport devices (23a, 24a and 23b, 24b) pallets (35) with stacks of material plates can be supplied to the loading devices (21a, 21b) in different ways.

23. The cutting system as claimed in claim 20, **characterized in that** a respective individually controllable unloading device (31a, 31b) preferably traversable transversely to the transport direction is assigned in the unloading station (C) to each of the two transport devices (11a, 11b), which unloading device (31a, 31b) removes the cut-out blanks (19) from the associated transport device and piles them up to form a stack.

24. The cutting system as claimed in claim 23, **characterized in that** at least two respective pallet transport devices (33a, 34a and 33b, 34b) are provided at the unloading devices (31a, 31b), by means of which pallet transport devices (33a, 34a and 33b, 34b) pallets (35) with stacks of blanks (19) can be transported away in different ways.

25. The cutting system as claimed in one of claims 20 to 24, **characterized in that** a disposal station (D) for the disposal of the grids (20) remaining during the cutting is arranged downstream of the loading station (C) in the transport direction.

26. The cutting system as claimed in claim 25, **characterized in that** the disposal station (D) comprises a shredder device (36) for cutting up the grids (20).

27. The cutting system as claimed in one of claims 17 to 26, **characterized in that** a holding and positioning device (30a, b) is provided in the cutting cell (B) as means (30a, b) for holding the material plates (13a, 13b) to be cut for each cutting position (SP1,SP2), which holding and positioning device (30a, 30b) holds the material plate to be cut in the region of the blank (19) and presses it against a stop.

28. The cutting system as claimed in claim 21 or 22,
**characterized in that** a respective tilting device (22a, 22b) for tilting the pallets loaded with stacks of material plates is arranged in the region of the loading devices (21a, 21b).

29. The cutting system as claimed in one of claims 13 to 28, **characterized in that** the cutting device (14, 15, 16) is designed as a laser cutting device.

30. The cutting system as claimed in claim 29, **characterized in that** the cutting device (14, 15, 16) comprises a laser source (14), a deflecting means (15) and a cutting head (16), the cutting head (16) being arranged so as to be traversable between the cutting positions (SP1, SP2) and parallel to the material plates (13a, 13b) located in the cutting position (SP1, SP2), and the laser light from the laser source (14) located above the transport means or transport devices (11a, 11b) being deflected into the cutting head (16) by the deflecting means (15).

31. The cutting system as claimed in claim 30, **characterized in that** the laser beam can be deflected to the different cutting positions (SP1, SP2) in the cutting head (16).

32. The cutting system as claimed in claim 30, **characterized in that** the cutting head (16) can be pivoted with the laser beam (17) to the different cutting positions (SP1, SP2).

## Revendications

1. Procédé de découpe de panneaux de matériau (13a, 13b), notamment de tôles métalliques, dans lequel les panneaux de matériau à découper (13a, 13b) sont d'abord amenés dans une position de découpe verticale (SP1, SP2), et sont ensuite découpés au moyen d'un dispositif de découpe (14, 15, 16) à partir d'un côté, les panneaux de matériau (13a, 13b) étant amenés pour la découpe dans deux positions de découpe (SP1, SP2) différentes pouvant être atteintes par le dispositif de découpe (14, 15, 16), et étant découpés les uns après les autres,
**caractérisé en ce que**
les deux seules positions de découpe (SP1, SP2) sont disposées avec une symétrie de révolution autour d'un axe vertical (12) et **en ce que** le dispositif de découpe (14, 15, 16) est déplacé en conséquence par rapport à l'axe (12) pour atteindre la position de découpe suivante (SP1, SP2) et **en ce que** l'on peut effectuer un transfert de l'une à l'autre de ces deux positions de découpe (SP1, SP2) par une rotation de 180° autour de l'axe vertical (12).

2. Procédé selon la revendication 1, **caractérisé en ce que** tandis qu'un premier panneau de matériau (13a) est découpé dans une première position de découpe (SP1, SP2), un deuxième panneau de matériau (13b) est amené dans une deuxième position de découpe (SP2, SP1), et **en ce qu'**après la découpe du premier panneau de matériau (13a), le dispositif de découpe (14, 15, 16) est ajusté à la deuxième position de découpe (SP2, SP1) et le deuxième panneau de matériau (13b) est découpé.

3. Procédé selon la revendication 2, **caractérisé en ce que** le passage d'une position de découpe à l'autre (SP1, SP2) s'effectue de manière périodique, et **en ce qu'**avant qu'un nouveau panneau de matériau soit amené pour sa découpe dans une position de découpe (SP1, SP2), un panneau de matériau découpé préalablement dans cette position de découpe (SP1, SP2) est enlevé de cette position de découpe (SP1, SP2).

4. Procédé selon l'une quelconque des revendications 1 à 3, **caractérisé en ce que** l'on utilise pour la découpe un faisceau laser (17) et **en ce que** pour le passage d'une position de découpe à l'autre (SP1, SP2), le faisceau laser (17) est dévié en conséquence.

5. Procédé selon l'une quelconque des revendications 1 à 4, **caractérisé en ce que** les panneaux de matériau (13a, 13b) sont amenés dans les positions de découpe (SP1, SP2) et sont transportés hors des positions de découpe (SP1, SP2) suspendue.

6. Procédé selon la revendication 5, **caractérisé en ce que** le transport des panneaux de matériau (13a, 13b) s'effectue sur des voies rectilignes.

7. Procédé selon les revendications 3 et 6,
**caractérisé en ce que** le transport des panneaux de matériau (13a, 13b) jusqu'aux positions de découpe (SP1, SP2) et hors des positions de découpe s'effectue sur des voies parallèles au moyen de deux dispositifs de transport séparés (11a, 11b).

8. Procédé selon l'une quelconque des revendications 1 à 7, **caractérisé en ce que** les panneaux de matériau (13a, 13b) sont maintenus à chaque fois de manière fixée en position pendant la découpe, et **en ce qu'**un contour de coupe prédéterminé (18) est parcouru avec le dispositif de découpe (14, 15, 16).

9. Procédé selon la revendication 8, **caractérisé en ce que** pour le parcours du contour de coupe (18), le dispositif de découpe (14, 15, 16) est déplacé parallèlement au plan du panneau de matériau (13a, 13b) suivant deux axes.

10. Procédé selon la revendication 8, **caractérisé en ce que** les panneaux de matériau (13a, 13b) sont divisés par la découpe en un flan (19) et une trame restante inutile (20), et **en ce que** les panneaux de matériau (13a, 13b) sont maintenus pendant la découpe dans la région du flan (19).

11. Procédé selon la revendication 10, **caractérisé en ce que** lors de la découpe des panneaux de matériau (13a, 13b), le flan (19) est séparé de la trame (20) à l'exception de quelques minces nervures de connexion, et **en ce que** le flan (19) et la trame (20) sont seulement finalement séparés l'un de l'autre après que le panneau de matériau découpé a été transporté hors de sa position de découpe (SP1, SP2).

12. Procédé selon la revendication 11, **caractérisé en ce qu'**après la séparation finale du flan (19) et de la trame (20), les flans (19) sont rassemblés sous forme séparée et les trames (20) sont détruites et jetées.

13. Procédé selon la revendication 5, **caractérisé en ce que** pour le transport des panneaux de matériau (13a, 13b), on utilise des dispositifs de transport (11a, 11b) dans lesquels les panneaux de matériau (13a, 13b) peuvent être suspendus, et **en ce que** les panneaux de matériau (13a, 13b) peuvent être prélevés séparément avant leur suspension dans les dispositifs de transport (11a, 11b), à chaque fois dans une pile de panneaux de matériau.

14. Procédé selon la revendication 13, **caractérisé en ce que** pour la séparation des panneaux de matériau (13a, 13b), la pile de panneaux de matériau est basculée d'une position horizontale dans une position oblique.

15. Installation de découpe (10, 10') pour mettre en oeuvre le procédé selon l'une quelconque des revendications précédentes, comprenant des premiers moyens (30a, 30b) pour maintenir les panneaux de matériau (13a, 13b) à découper dans une position de découpe verticale (SP1, SP2), des deuxièmes moyens (11a, 11b) pour transporter les panneaux de matériau (13a, 13b) vers la position de découpe verticale (SP1, SP2) et hors de la position de découpe verticale (SP1, SP2), ainsi qu'un dispositif de découpe (14, 15, 16) fonctionnant dans la direction latérale pour découper les panneaux de matériau se trouvant dans la positon de découpe verticale (SP1, SP2), deux positions de découpe différentes (SP1, SP2) pouvant être rapprochées des moyens de transport (11a, 11b) étant prévues, le dispositif de découpe (14, 15, 16) étant à chaque fois ajustable sur les deux positions de découpe (SP1, SP2) différentes et un dispositif de transport (11a, 11b) étant associé à chaque position de découpe (SP1, SP2), les dispositifs de transport (11a, 11b) s'étendant parallèlement l'un à l'autre,
**caractérisée en ce que**
les positions de découpe (SP1, SP2) sont disposées dans une cellule de découpe (B) tout autour du dispositif de découpe (14, 15, 16) en regard l'une de l'autre et l'on peut effectuer un transfert de l'une à l'autre par une rotation de 180° autour d'un axe vertical (12), et **en ce que** les dispositifs de transport (11a, 11b) sont guidés à travers la cellule de découpe (B).

16. Installation de découpe selon la revendication 15, **caractérisée en ce que** les moyens de transport comprennent un nombre de dispositifs de transport indépendants (11a, 11b) correspondant au nombre de positions de découpe (SP1, SP2), qui sont associés à chaque fois à une position de découpe particulière (SP1, SP2).

17. Installation de découpe selon la revendication 16, **caractérisée en ce que** les dispositifs de transport (11a, 11b) sont réalisés pour le transport en suspension des panneaux de matériau (13a, 13b).

18. Installation de découpe selon la revendication 17, **caractérisée en ce que** les dispositifs de transport (11a, 11b) comprennent chacun une chaîne périphérique s'étendant dans la direction horizontale, sur laquelle sont prévus, à intervalles réguliers, des dispositifs de suspension des panneaux de matériau (13a, 13b).

19. Installation de découpe selon la revendication 18, **caractérisée en ce que** les deux dispositifs de transport (11a, 11b) transportent les panneaux de matériau (13a, 13b) dans la même direction.

20. Installation de découpe selon la revendication 19, **caractérisée en ce que** dans la direction de transport avant la cellule de découpe (B), est disposé un poste de chargement (A) pour charger indépendamment les deux dispositifs de transport (11a, 11b) avec des panneaux de matériau (13a, 13b), et après la cellule de découpe (B) est disposé un poste de déchargement (C) pour enlever indépendamment les flans (19) découpés dans les panneaux de matériau (13a, 13b) hors des deux dispositifs de transport (11a, 11b).

21. Installation de découpe selon la revendication 20, **caractérisée en ce que** dans le poste de chargement (A), on associe à chacun des deux dispositifs de transport (11a, 11b) un dispositif de chargement (21a, 21b) déplaçable de préférence transversalement à la direction de transport et commandable individuellement, qui reçoit séparément les panneaux de matériau d'une pile et qui les suspend au dispositif de transport associé.

22. Installation de découpe selon la revendication 21, **caractérisée en ce que** l'on prévoit sur les dispositifs de chargement (21a, 21b) à chaque fois au moins deux dispositifs de transport sur palette (23a, 24a, respectivement 23b, 24b) au moyen desquels on peut acheminer aux dispositifs de chargement (21a, 21b) de diverses manières, des palettes (35) avec des piles de panneaux de matériau.

23. Installation de découpe selon la revendication 20, **caractérisée en ce que** dans le poste de déchargement (C), chacun des deux dispositifs de transport (11a, 11b) est associé à chaque fois à un dispositif de déchargement (31a, 31b) pouvant être commandé indépendamment, déplaçable de préférence transversalement à la direction de transport, qui prélève du dispositif de transport associé les flans découpés (19) et qui les empile pour former une pile.

24. Installation de découpe selon la revendication 23, **caractérisée en ce que** l'on prévoit sur les dispositifs de déchargement (31a, 31b) à chaque fois au moins deux dispositifs de transport de palettes (33a, 34a, respectivement 33b, 34b), au moyen desquels des palettes (35) comprenant des piles de flans (19) peuvent être évacuées de diverses manières des dispositifs de déchargement (31a, 31b).

25. Installation de découpe selon l'une quelconque des revendications 20 à 25, **caractérisée en ce qu'**un poste de mise au rebut (D) pour la mise au rebut des trames (20) subsistant après la découpe est disposé dans la direction de transport derrière le poste de déchargement (C).

26. Installation de découpe selon la revendication 25, **caractérisée en ce que** le poste de mise au rebut (D) comprend un dispositif de déchiquetage (36) pour déchiqueter les trames (20).

27. Installation de découpe selon l'une quelconque des revendications 17 à 26, **caractérisée en ce que** dans la cellule de découpe (B), on prévoit comme moyen (30a, 30b) pour maintenir les panneaux de matériau (13a, 13b) à découper dans chaque position de découpe (SP1, SP2), un dispositif de maintien et de positionnement (30a, 30b) qui maintient les panneaux de matériau à découper dans la région du flan (19) et qui les presse contre une butée.

28. Installation de découpe selon la revendication 21 ou 22, **caractérisée en ce que** l'on dispose dans la région des dispositifs de chargement (21a, 21b) à chaque fois un dispositif de basculement (22a, 22b) pour faire basculer les palettes portant les piles de panneaux de matériau.

29. Installation de découpe selon l'une quelconque des revendications 13 à 28, **caractérisée en ce que** le dispositif de découpe (14,15, 16) est réalisé sous forme de dispositif de découpe au laser.

30. Installation de découpe selon la revendication 29, **caractérisée en ce que** le dispositif de découpe (14,15, 16) comprend une source laser (14), un dispositif de déviation (15) et une tête de découpe (16), la tête de découpe (16) étant disposée de manière déplaçable entre les positions de découpe (SP1, SP2) et parallèlement aux panneaux de matériau (13a, 13b) se trouvant dans la position de découpe (SP1, SP2), et la lumière laser est déviée hors de la source laser (14) se trouvant au-dessus des moyens de transport ou des dispositifs de transport (11a, 11b) par le dispositif de déviation (15) dans la tête de découpe (16).

31. Installation de découpe selon la revendication 30, **caractérisée en ce que** dans la tête de découpe (16), le faisceau laser peut être dévié vers les diverses positions de découpe (SP1, SP2).

32. Installation de découpe selon la revendication 30, **caractérisée en ce que** la tête de découpe (16) peut être pivotée avec le faisceau laser (17) dans les diverses positions de découpe (SP1, SP2).
